# NEUE EUROPÄISCHE PATENTSCHRIFT

(11) **EP 0 155 257 B2**
(45) Veröffentlichungstag und Bekanntmachung des Hinweises auf die Entscheidung über den Einspruch: **02.02.1994**
(45) Hinweis auf die Patenterteilung: 22.03.1989
(21) Anmeldenummer: 85890021.0
(22) Anmeldetag: 30.01.1985
(51) Int. Cl.: F16C 33/24

(54) **Verbundgleitlager**
Babbitt sliding bearing
Palier à contact lisse en métal composé

(30) Priorität: 27.02.1984 AT 628/84
(43) Veröffentlichungstag der Anmeldung: 18.09.1985
(73) Patentinhaber: MIBA Gleitlager Aktiengesellschaft, A-4663 Laakirchen (AT)
(72) Erfinder: Ehrentraut, Otto, A-4810 Gmunden (AT); Ederer, Ulf Gerhard, Dipl.-Ing., A-4813 Altmünster (AT)
(74) Vertreter: Hübscher, Gerhard, Dipl.-Ing.

(56) Entgegenhaltungen:
- EP-A- 57 808
- DE-A- 1 938 010
- GB-A- 718 073
- US-A- 2 187 755

## Beschreibung

### Verbundgleitlager

Die Erfindung bezieht sich auf ein Verbundgleitlager, bestehend aus einer tragenden Stützschale, einer auf der Stützschale aufgebrachten Lagermetallschicht sowie aus einer auf der Lagermetallschicht aufgetragenen Laufschicht, zwischen der und der Lagermetallschicht eine Zwischenschicht vorgesehen ist.

Um einerseits den dynamischen und anderseits den thermischen Belastungen hochbelasteter Lager Rechnung zu tragen, werden die sogenannten Verbundlager schichtenweise aufgebaut, wobei zwischen der weicheren Laufschicht und der härteren Lagermetallschicht eine Zwischenschicht vorgesehen wird, die bei kupferhältigen Laufschichten im wesentlichen als Diffusionssperre und bei Leichtmetallegierungen als Haftvermittler wirkt. Diese Zwischenschicht, die im allgemeinen aus Nickel aufgebaut ist, weist eine gegenüber der Laufschicht wesentlich grössere Härte auf, so dass bei einem Verschleiss der weicheren Laufschicht die Gefahr einer örtlichen Überlastung durch Störeinflüsse erheblich steigt, weil die Zwischenschicht dann über grössere Laufflächenanteile wirksam wird. Wegen der üblichen Forderung, die Lauffläche mit einer hohen Oberflächengüte auszubilden, wird auch die Oberfläche der Lagermetallschicht und damit die Zwischenschicht mit einer vergleichsweise geringen Rauhtiefe hergestellt, was bei einem Verschleiss der Laufschicht zum flächigen Durchbruch der Zwischenschicht führt. Aus diesem Grunde wurde versucht, die Zwischenschicht möglichst dünn auszubilden, um einen raschen Abtrag der Zwischenschicht zu unterstützen. Diese Massnahme kommt zwar der Lebensdauer zugute, doch wird damit die Wirkung der Zwischenschicht als Diffusionssperre bzw. Haftvermittler zumindest teilweise aufgehoben. Dazu kommt noch, dass das Auftragen der Zwischenschicht in einer sehr geringen Stärke besondere Massnahmen erfordert, die die Herstellung solcher Lager aufwendiger machen.

Zum Auftragen von Lagerschichten auf Konstruktionsteilen, die sonst ein gesondertes Lager aufnehmen müssen, ist es bekannt (US-A-2 187 755). die die Lagerschichten aufnehmende Oberfläche zu profilieren und die Lagerschichten auf diese profilierte Oberfläche nacheinander galvanisch aufzutragen. so dass diese der Oberflächenprofilierung folgenden Schichten nach einem Abtrag der Wellungen im Bereich der Gleitfläche aufeinanderfolgende Laufflächenanteile bilden. Da bei diesem Stand der Technik alle Lagerschichten einen bestimmten Anteil an der Lauffläche aufweisen sollen; kann ein solcher Lageraufbau keine Lehre geben, wie bei Verbundgleitlagern mit einer durchgehenden Laufschicht auf einer Lagermetallschicht der störende Einfluss einer Zwischenschicht zwischen Laufschicht und Lagermetallschicht bei einem Laufschichtverschleiss verringert werden kann.

Bei Gleilagern mit einer inhomogenen Laufschicht ist es bekannt (DE-A-1938010), in Vertiefungen eines härteren Lagerwerkstoffes einen weicheren Lagerwerkstoff einzubetten, der im Neuzustand des Lagers die gesamte Oberfläche des härteren Lagerwerkstoffes überdeckt und zunächst die Lagerlauffläche bildet. Während des Betriebes und des Verschleißes des lagers wird dann die Oberfläche des härteren Lagerwerkstoffes außerhalb der Vertiefungen freigelegt, so daß sich eine besonderen Belastungen Rechnung tragende Mischoberfläche ergibt. Da keine durchgehende zur Lagerlauffläche parallele Grenzfläche zwischen dem härteren und dem weicheren Lagerwerkstoff vorliegt, tritt das bei einer homogenen Laufschicht nach einem Laufschichtverschleiß zum Tragen kommende Problem eines großflächigen Durchbruches der allenfalls vorgesehenen Zwischenschicht nicht auf. Gleiches gilt für ein anderes bekanntes Gleitlager (EP-A-0 057 808), bei dem ein weicherer Lagerwerkstoff in nutenartige Ausnehmungen eingebettet ist, die mit der Laufrichtung höchstens einen Winkel von 15° einschließen.

Der Erfindung liegt somit die Aufgabe zugrunde, diese Mangel zu vermeiden und ein Verbundgleitlager der eingangs geschilderten Art so zu verbessern, dass bei voller Wirksamkeit der Zwischenschicht deren Einfluss auf die Lebensdauer bei einem Verschleiss der Laufschicht erheblich herabgesetzt werden kann.

Die Erfindung löst die gestellte Aufgabe dadurch, dass die die Zwischenschicht tragende Oberfläche der Lagermetallschicht eine Profilierung mit einer Profiltiefe aufweist, die Kleiner als die geringste Schichtdicke der innenverschlissenen Laufschicht, aber größer als die 1,5-fache Dicke der der Profilform folgenden Zwischenschicht, mindestens aber 5 um ist, daß die Profilierung sich zumindest im wesentlichen in Laufrichtung erstreckende Nuten bildet und daß die Lauffläche des innenverschlissenen Lagers eine der Profilierung folgende Profilierung aufweist.

Durch die Profilierung der die Zwischenschicht tragenden Oberfläche der Lagermetallschicht wird beim Auftragen der Zwischenschicht in einer annähernd konstanten Stärke auch eine Profilierung der Zwischenschicht erhalten, die aufgrund der nach unten begrenzten Profiltiefe in keinem Verschleissstadium über einen grösseren, zusammenhängenden Oberflächenbereich reicht. Neben dem Anteil der vergleichsweise härteren Zwischenschicht ist folglich stets ein Anteil der weicheren Laufschicht bzw. der die Zwischenschicht tragenden Lagermetallschicht an der Lauffläche vorhanden, so dass sich bezüglich dieser Werkstoffe eine Kombinationswirkung einstellt, die die Gefahr örtlicher Anreibungen wesentlich herabsetzt, auch wenn die Laufschicht bereits zum Grossteil abgetragen ist.

Wegen des durch die Profilierung der Zwischenschicht sichergestellten geringeren Anteiles der Zwischenschicht an der Lauffläche nach einem entsprechenden Laufflächenverschleiss braucht auf die Stärke der Zwischenschicht keine besondere Rücksicht genommen zu werden, so dass die Zwischenschicht auch in grösseren Dikken aufgebracht werden kann. Mit der Form der Profilierung der Oberfläche der Lagermetallschicht und insbesondere der Profiltiefe kann der Zwischenschichtanteil an der Lauffläche nach einem Laufschichtverschleiss bestimmt werden. Die Profiltiefe soll dabei 5 µm nicht unterschreiten, um eine ausreichende Profilierung sicherzustellen.

Durch den Verlauf der sich auch in der Zwischenschicht abbildenden Nuten wird ein Einbetten harter Fremdkörper im härteren Werkstoff der Zwischenschicht praktisch ausgeschlossen, weil diese Fremdkörper vor allem in Umfangsrichtung bewegt werden und bei einer solchen Bewegung nicht auf quer zur Laufrichtung verlaufende Grenzzonen treffen. Ausserdem wird vermieden, dass in den Übergangszonen zwischen dem härteren und weicheren Lagerwerkstoff der hydrodynamische Schmierfilm durch quer zur Laufrichtung verlaufende Grenzzonen gestört wird.

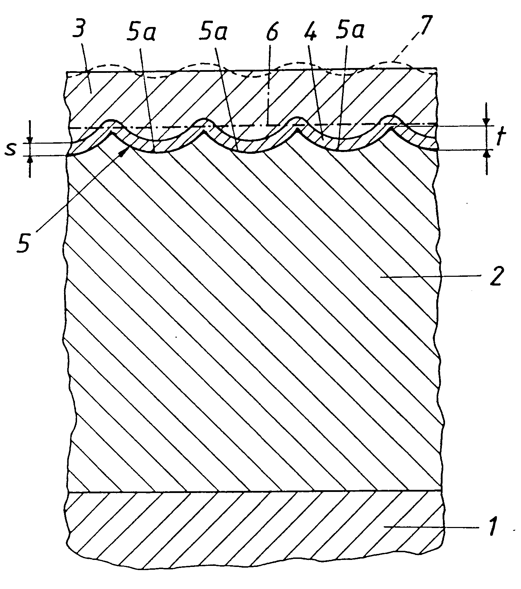

In der Zeichnung ist der Erfindungsgegenstand beispielsweise dargestellt, und zwar wird ein erfindungsgemässes Verbundgleitlager in einem schematischen Querschnitt gezeigt.

Das dargestellte Ausführungsbeispiel eines Verbundgleitlagers besteht im wesentlichen aus einer stählernen Stützschale 1, auf der eine Lagermetallschicht 2 aus einer Leichtmetall- oder Bronzelegierung aufgebracht ist. Diese Lagermetallschicht 2 trägt eine Laufschicht 3, beispielsweise auf Blei-Zinn-Kupferbasis, wobei zwischen der Laufschicht 3 und der Lagermetallschicht 2 eine Zwischenschicht 4 aus Nickel vorgesehen ist. Der Unterschied zu herkömmlichen Verbundgleitlagern dieser Art besteht darin, dass die Zwischenschicht 4 nicht auf einer möglichst glatten Oberfläche der Lagermetallschicht 2 aufgebracht ist, sondern auf einer mit einer Profilierung 5 versehenen Oberfläche, so dass sich auf Grund der zumindest angenähert gleichmässigen Schichtstärke auch eine Profilierung der Zwischenschicht 4 ergibt. Die Profiltiefe t ist dabei so gewählt, dass sie grösser als die 1,5fache Dicke s der Zwischenschicht, mindestens aber 5 µm ist, so dass sich bei einem Verschleiss der Laufschicht 3 unabhängig vom Ausmass des Verschleisses stets eine Lauffläche ergibt, die neben dem Anteil der Zwischenschicht 4 auch einen Anteil der Laufschicht 3 bzw. der Lagermetallschicht 2 aufweist, wie dies an Hand der einen bestimmten Abtrag andeutenden, strichpunktierten Linie 6 abgelesen werden kann. Vorzugsweise wird die Profiltiefe t grösser als die doppelte Dicke s der Zwischenschicht 4 gewählt, was den möglichen Anteil der Zwischenschicht an der Lauffläche entsprechend herabsetzt.

Aus der Zeichnung lässt sich ausserdem entnehmen, dass die Profilierung 5 sich zumindest im wesentlichen in Laufrichtung erstreckende Nuten 5a bildet, die beispielsweise durch eine Bearbeitung der Lagermetallschicht 2 mit einem Drehwerkzeug erhalten werden. Dieser Nutenverlauf verhindert, dass sich härtere Fremdkörper aus den weicheren Werkstoffen der Laufschicht bzw. der Lagermetallschicht in die härtere Zwischenschicht einlagern und dort Störstellen verursachen können, die zu örtlichen Überlastungen führen.

Es zeigt sich somit, dass zufolge der erfindungsgemässen Massnahmen in keinem Stadium des Verschleisses eine über eine grössere Fläche zusammenhängende Zwischenschicht an der Lauffläche auftritt, was den schädlichen Einfluss dieser Zwischenschicht auf die Lebensdauer in einem erheblichen Ausmass herabsetzt.

## Patentansprüche

1. Verbundgleitlager, bestehend aus einer tragenden Stützschale (1), einer auf der Stützschale (1) aufgebrachten Lagermetallschicht (2) sowie aus einer auf der Lagermetallschicht (2) aufgetragenen Laufschicht (3), zwischen der und der Lagermetallschicht (2) eine Zwischenschicht (4) vorgesehen ist, dadurch gekennzeichnet, daß die die Zwischenschicht (4) tragende Oberflache der Lagermetallschicht (2) eine Profilierung (5) mit einer Profiltiefe (t) aufweist, die Kleiner als die geringste Schichtdicke der unverschliessenen Laufschicht (3), aber größer als die 1,5fache Dicke (s) der der Profilform folgenden Zwischenschicht (4), mindestens aber 5 µm ist, daß die Profilierung (5) sich zumindest im wesentlichen in Laufrichtung erstreckende Nuten (5a) bildet und daß die Lauffläche (3) des unverschlissenen Lagers eine der Profilierung (5) folgende Profilierung (7) aufweist.

## Claims

1. A composite sliding surface bearing comprising a load-carrying backing shell (1), a bearing metal layer (2) applied to the backing shell (1), a sliding surface layer (3) applied to the bearing metal layer (2), and an interlayer (4) between the sliding surface layer and the bearing metal layer (2), characterized in that that surface of the bearing metal layer (2) which carries the interlayer (4) has a profile (5) in a depth (t) which amounts to at least 5 micrometers and is smaller than the smallest thickness of the non-worn sliding surface layer (3) but exceeds 1.5 times the thickness (s) of the interlayer (4), which follows the profile, that the profile (5) constitutes grooves (5a), which extend at least substantially in the peripheral direction and that the sliding surface layer (3) of the unworn bearing has a profile (7) which follows the profile (5).

## Revendications

1. Palier à glissement composite, constitué par une coquille de soutien (1) portante, par une couche (2) de régule déposée sur la coquille (1) de soutien, ainsi que par une couche (3) de roulement, qui est déposée sur la couche (2) de régule, une couche (4) intercalaire (4) étant prévue entre la couche (3) de roulement et la couche (2) de régule, caractérisé en ce que la surface de la couche (2) de régule, qui porte la couche (4) intercalaire, présente un profilage (5) ayant une profondeur (t) de profilage qui est plus petite que l'épaisseur de couche la plus faible de la couche (3) de roulement non fermée, mais qui est plus grande que 1,5 fois l'épaisseur (s) de la couche (4) intercalaire qui fait suite à la forme de profilage, mais est au moins de 5µm, et que le profilage (5) forme des rainures (5a) s'étendant au moins dans le sens du roulement et que la surface (3) de roulement du palier non fermé présente un profilage (7a) faisant suite au profilage (5).
